# EUROPEAN PATENT SPECIFICATION

(11) **EP 4 030 226 B1**
(45) Date of publication and mention of the grant of the patent: **10.04.2024**
(21) Application number: 22151459.9
(22) Date of filing: 13.01.2022
(51) Int. Cl.: G02F 1/1334, G02F 1/1343, G02F 1/155, B32B 17/10

(54) **METHOD OF CONNECTION TO A CONDUCTIVE MATERIAL**
VERFAHREN ZUM VERBINDEN MIT EINEM LEITFÄHIGEN MATERIAL
PROCÉDÉ DE CONNEXION À UN MATÉRIAU CONDUCTEUR

(30) Priority: 13.01.2021 US 202163136870 P
(43) Date of publication of application: 20.07.2022
(73) Proprietor: Carlex Glass America, LLC, Nashville, TN 37209 (US)
(72) Inventor: BRONSTEIN, Wladislaw, 6776 Grevenmacher (LU); SOL, Jean-Marc, 6776 Grevenmacher (LU); KATO, Norihiko, Nashville, Tennessee 37209 (US)
(74) Representative: Mewburn Ellis LLP

(56) References cited:
- WO-A1-2020/020804
- JP-A- 2018 022 154
- US-A1- 2004 021 928
- US-A1- 2016 161 818
- US-A1- 2020 056 423

## Description

### Cross Reference to Related Applications

This application claims priority to U. S. Provisional Application No. 63/136,870 filed on January 13, 2021, entitled "**METHOD OF CONNECTION TO A CONDUCTIVE** MATERIAL".

### Technical Field

The present disclosure is generally related to a method of preparing a busbar on a conductive material, particularly a conductive layer within a switchable film.

### Background

Switchable films in glass constructions may be provided for various purposes, including architectural and vehicle windows. Switchable films may include those based on liquid crystal constructions and may be selectively changed from an opaque or dark state to a transparent, or clear, state by the application of an electric field to the film. The electrical connection may be formed within the glass construction to control the switchable material. When an electric field is activated, the switchable material may transfer from an opaque state to a transparent state or vice versa.

Switchable materials may include polymer dispersed liquid crystal (PDLC) and polymer network liquid crystal (PNLC) constructions. PDLC materials are formed by liquid crystals dispersed throughout a liquid polymer matrix. As the polymer matrix solidifies, the liquid crystals form droplets. The random orientation of liquid crystal droplets results in the opaque, milky appearance of the PDLC in an OFF state. When an electrical current is applied to the PDLC, the liquid crystals may align parallel to the direction of the electric field. The parallel orientation allows for light to pass through, and in an ON state, PDLC is transparent relative to the OFF state. PNLC may also provide a film that may selectively switch between opaque and transparent states. PNLC films may have a higher ratio of liquid crystal to polymer and require a lower driving voltage than a PDLC. PDLC and PNLC films may also be configured to have a reverse alignment where, in a default OFF state, the PDLC or PNLC is transparent, and in an ON state with an electric voltage applied, the PDLC or PNLC is opaque.

To power the switchable films, electrical connections must be made to conductive layers in the switchable films. The connections may include the positioning of a busbar on the conductive layers. For efficient processing of the films and preparation of laminated glazings including such films, an efficient method for positioning busbars on conductive layers of the switchable films is needed. The following documents constitute prior art relevant to the invention: US 2016/161818 A1, US 2004/021928 A1, WO 2020/020804 A1, US 2020/056423 A1, JP 2018 022154 A.

### Brief Summary of the Exemplary Embodiments

The disclosed exemplary embodiments are generally directed to a method of connection to a conductive material, particularly useful for assembling a laminated glazing with a switchable film.

According to the claimed invention, a method of applying a busbar to a switchable film includes the steps of providing a switchable film having a first substrate, a first conductive layer, a switchable layer, a second conductive layer, and a second substrate, wherein each of the first substrate and the second substrate are comprised of polyethylene terephthalate (PET) films; applying a solder material to the first conductive layer with ultrasonic application to provide a first busbar; and applying the solder material to the second conductive layer with ultrasonic application to provide a second busbar.

In the some embodiments, the solder material may be flux-free and/or lead-free. Each of the first and second busbars may have a length of at least 5 cm or at least 10 cm. Each of the first and second busbars may have a width of 6 mm or less. The method may include the step of removing a portion of the second substrate and the second conductive layer before applying the solder material to the first conductive layer and removing a portion of the first substrate and the first conductive layer before applying the solder material to the second conductive layer. In some embodiments, the switchable material may be cleaned off of the first conductive layer and the second conductive layer prior to applying the solder material. In some embodiments, the conductive layer may not be cleaned prior to applying the solder material to the first conductive layer and the second conductive layer such that at least part of the switchable layer remains on the first conductive layer and the second conductive layer during application of the solder material.

In the same or different embodiments, a first connector may be applied to the first busbar while a second connector may be applied to the second busbar. The first connector and the second connector may be applied by the solder material used for the first busbar and the second busbar. The first connector and the second connector may be applied on the first busbar and the second busbar using a conductive adhesive. The first connector and the second connector may be flexible connectors.

In some embodiments, a first metallic foil may be applied over the first busbar whereas a second metallic foil may be applied over the second busbar. The first metallic foil and the second metallic foil may be formed from a copper tape. In a further embodiment, a first connector may be applied to the first metallic foil whereas a second connector may be applied to the second metallic foil.

In some embodiments, the ultrasonic application may include application of the solder material with an ultrasonic probe at a temperature from 230°C to 290°C, preferably from 235°C to 275°C. The switchable film may be a polymer dispersed liquid crystal film. Where the first conductive layer has more than one electrically isolated portion, each electrically isolated portion may include one of the first busbars.

In another aspect of this disclosure, a method of preparing a laminated glazing may include a step of laminating a switchable film prepared by the method described above between a first glass sheet and a second glass sheet.

### Brief Description of the Drawings

The accompanying drawings, which are incorporated into and constitute a part of this specification, illustrate one or more example aspects of the present disclosure and, together with the detailed description, serve to explain their principles and implementations.
FIG. 1 illustrates a portion of a switchable film prepared by methods disclosed herein;
FIG. 2 illustrates a portion of a switchable film prepared by methods disclosed herein;
FIG. 3 illustrates a cross section of a portion of a laminated glazing having switchable film prepared by methods disclosed herein;
FIG. 4 illustrates a cross section of a portion of a switchable film prepared by a method disclosed herein;
FIG. 5 illustrates a cross section of a portion of a switchable film prepared by a method disclosed herein;
FIG. 6 illustrates a cross section of a portion of a switchable film prepared by yet another method disclosed herein;
FIG. 7 illustrates a cross section of a portion of a switchable film prepared by a further method disclosed herein;

### Detailed Description

In the following description, for purposes of explanation, specific details are set forth in order to promote a thorough understanding of one or more aspects for the disclosure. It may be evident in some or all instances, however, that many aspects described below can be practiced without adopting the specific design details described below.

A switchable film may include, for example, a liquid crystal material, such as a polymer dispersed liquid crystal (PDLC) or polymer network liquid crystal (PNLC) film, an electrochromic film, or a nanoparticle material, such as a suspended particle device (SPD) film. A switchable film may particularly change between an opaque state and a relatively transparent state due to the application of an electrical field to the film. Particularly the switchable film may include a first substrate, a first conductive layer electrode, a switchable layer, a second conductive layer electrode, and a second substrate. The first and second substrates may preferably be a polymer film, such as a polyethylene terephthalate (PET) film. The conductive layers may include a conductive metal oxide, such as indium tin oxide (ITO). The switchable film may particularly be powered by connection to each of the conductive layers. A busbar may be provided on each of the conductive layers, and a connector may be applied to each busbar for connection to power source.

To create a suitable electrical connection to the conductive layers, busbars formed on the conductive layers must have a good electrical and mechanical connection to the conductive layers and further provide for a proper attachment of an electrical connector. Preparing such busbars on the conductive layers may create a time consuming production step. An efficient process for the application of such busbars is desirable to improve production processes and cost. Methods described herein include providing a switchable film and applying a solder to a conductive layer of the switchable film via ultrasonic application to provide a busbar on the conductive layer.

Preferably, methods herein include applying a busbar to an exposed conductive layer of a switchable film. The busbar is formed of a solder material which is applied by ultrasonic application. Ultrasonic application may particularly include applying the solder material with an ultrasonic probe for providing ultrasonic vibrations which may activate the solder material. Cavitation of the solder material by the ultrasonic soldering provides the attachment of the solder material to the underlying conductive layer. Oxides in the solder material may be mechanically disrupted by ultrasonic vibrations. The ultrasonic probe may be heated for the soldering process at least to a melting temperature of the solder material. The ultrasonic probe may be formed with a heater to increase the temperature of the soldering material. The heater may be controlled to apply suitable heat to the soldering material. If the probe is not hot enough, the solder material may not properly adhere to the conductive layer, and if the probe is too hot, a substrate layer under the conductive layer may melt or otherwise be deformed. Preferably, the probe is set to a temperature from 150°C to 290°C, more preferably from 230°C to 290°C, more preferably from 235°C to 275°C. The inventors found that at a temperature of 230°C provided suitable adhesion of the solder material to the conductive layer with Cerasolzer (registered trademark) #217 from Kuroda Techno. However, the temperature of the probe may be lowered down to 150°C, if another solder which has suitable adhesion at a temperature down to 150°C is used. A temperature of 300°C damaged an underlying polyethylene terephthalate substrate film. If a substrate other than polyethylene terephthalate is used, the temperature threshold may increase or decrease based on what may cause damage to the underlying substrate film. Further, a power output from 10 Watts to 13 Watts may be preferable with the ultrasonic probe during busbar application. The ultrasonic probe may preferably be used a frequency from 30 to 70 kHz.

The solder material may include a flux-free material suitable for ultrasonic application. Preferably, the solder is lead-free. For example, Cerasolzer (registered trademark) (such as #217) from Kuroda Techno may be used. These may include suitable conductive materials, such as Zn, Ti, Si, Al, Be, and Rare Earth Elements, which may react strongly with oxygen and create a strong bond with the underlying coated surface, particularly in the presence of an ultrasonically-produced cavitation field.

The solder material may particularly be applied in a shape desired for a busbar, such as a line of solder positioned along an edge of the conductive layer. The busbar may preferably have a width and length suitable for providing suitable electrical connection to conductive layer and providing a surface for attachment of an electrical connector. For example, a busbar may have a length of about 5 cm or more or about 10 cm or more. Further, some busbars may have a width of 6 mm or less. The width of the busbar may be 0.5 mm or more to accommodate a connector, but is preferably minimized so as to take up less space on the switchable film and in a laminated glazing. Preferably the busbar does not have a width greater than 10 mm.

A switchable film includes, according to the claimed invention, two opposing conductive layers which may independently connect to a power source. Thus, each conductive layer in a switchable film requires a busbar to facilitate such connections. The busbars are formed on each conductive layer by the same process. Some switchable films may include electrically isolated segments in one or both conductive layers. Each electrically isolated portion of the coating may include a separate busbar to maintain electrical isolation. Methods disclosed herein may be used to prepare any or all of the busbars for a particular switchable film.

A connector may be attached onto the busbar and attached to a power source for controlling the switchable film. The connector may be a flexible connector, for example. To attach the connector to the busbar, any solder or conductive adhesive may be used. Preferably the same solder material used for preparation of the busbar may further be used for attachment of the connector. The process of attaching the connector may preferably include a soldering process which does not exceed a temperature of 290°C, more preferably 275°C. Preferably the connector is attached using a soldering process at the same temperature used during the busbar preparation. In some preferable embodiments, the connector may be soldered to the busbar using an ultrasonic soldering probe.

In some embodiments, a metallic foil may be positioned over the busbar. Such a metallic foil may provide a good surface for a connector attachment. The metallic foil may include, for example, a copper tape. The metallic foil may include an adhesive, particularly a conductive adhesive, such that an electrical connection may be formed between the conductive layer and a connector soldered to the metallic foil.

In some methods, the switchable film may be provided without an exposed conductive layer, such that the conductive layer(s) must be exposed prior to applying a busbar thereon. Particularly, exposing the first conductive layer in an area for application of a busbar may include removing a substrate film and a second conductive layer to expose the first conductive layer. Removal may include cutting away the materials. Switchable material may remain on the first conductive layer during busbar application. In some embodiments, the first conductive layer may be cleaned with alcohol to remove the switchable material, leaving the first conductive layer ready for busbar application. The second conductive layer may be similarly prepared for a busbar by the local removal of the other substrate layer and the first conductive layer. The cutaway portion of the substrate and second conductive layer may have a width such that a distance between the busbar and the edge of the film and second conductive layer is preferably from 0.5 mm to 5 mm, more preferably from 1 mm to 3 mm.

The switchable film may be further laminated between first and second glass sheets. The switchable film may, for example, be laminated in an automotive glazing, such as a sunroof, a rear window, side window, or windshield. A laminated glazing may particularly include a first glass sheet, a first interlayer, a switchable film, a second interlayer, and a second glass sheet. The lamination process may include stacking the glass sheets, interlayers, and switchable film to provide a lamination stack where the switchable film is positioned between the first and second interlayers which are positioned between the first and second glass sheets. The busbars and connectors may be positioned on the conductive layers of the switchable film prior to lamination. The lamination process may include deairing the lamination stack to remove air from between the materials of the lamination stack. After deairing, the stack may be autoclaved, which includes applying heat and pressure to the lamination stack to provide a laminated glazing. Connectors attached to the switchable film may extend out of the glazing edge such that they can be connected to a power source outside of the glazing.

In a laminated glazing, the switchable film may be smaller than the first and second glass sheets in terms of surface area so that there is a distance between the edge of the laminated glazing and the edge of the switchable film within the glazing. Where a switchable film has a thickness of at least 0.25 mm, the laminated glazing may further include a third interlayer around the edge of the switchable film such that there is minimal to no change in thickness where the switchable film ends.

In a particular example, Cerasolzer (registered trademark) #217 from Kuroda Techno was applied to a conductive layer of a polymer dispersed liquid crystal film using an ultrasonic soldering probe at a temperature of 250°C and at 12.5 W power. The conductive layer of the examples included indium tin oxide. A portion of the second substrate and second conductive layer were removed to reveal the first conductive layer. The solder material was then applied to provide a busbar on the first conductive layer. In some additional examples, the switchable material that remained on the first conductive layer was removed with alcohol prior to busbar application. Connectors were then soldered to the busbars and the switchable films were laminated between first and second glass sheets. In some examples, a copper tape was applied over the busbars prior to attachment of a connector. In some examples, the copper tape, which is connected to the first busbar or to the second busbar can be wrapped around the edge of the switchable film, to allow connection of first and second busbars from the same side of the switchable film.

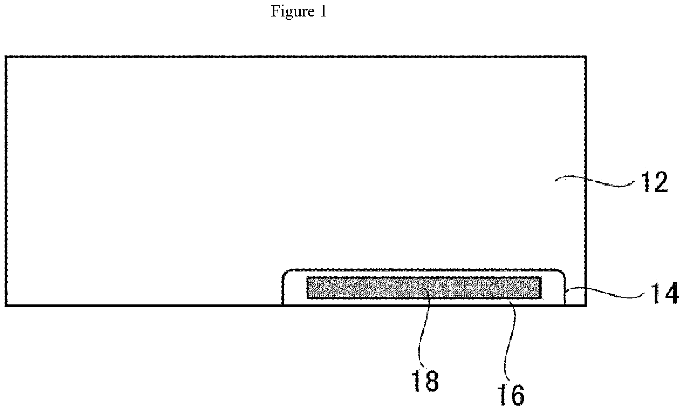

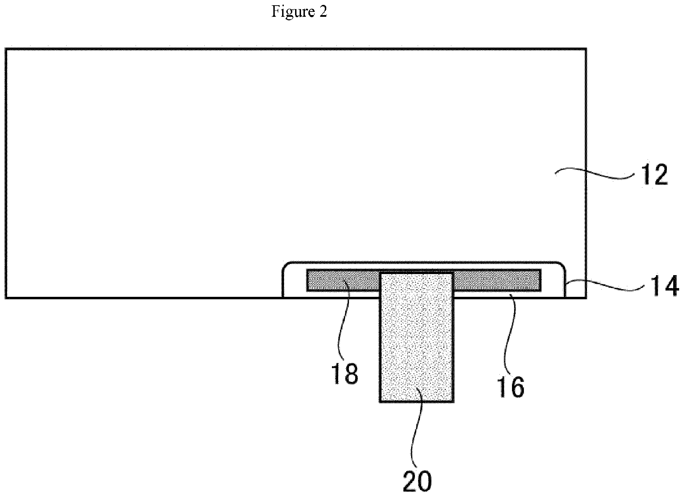

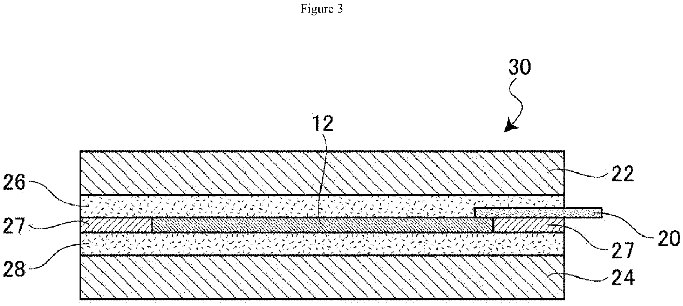

FIG. 1 illustrates a portion of a switchable film 12 having a busbar 18 prepared thereon according to methods disclosed herein. FIG. 2 illustrates a portion of the switchable film 12 having a connector 20 attached to a busbar 18 prepared according to methods disclosed herein. FIG. 3 illustrates a laminated glazing 30 having a switchable film 12 laminated therein. In FIG. 1 to FIG. 3, the switchable film 12 and the laminated glazing shows only a part of the film for an illustrative purpose. In FIG. 1, the switchable film 12 may be provided in a sheet-like rectangular shape, and a substrate cutaway 14 may be formed to open an edge of the switchable film 12 in a longitudinal shape to expose a first conductive layer 16 of the switchable film 12. The substrate cutaway 14 may be formed by partly removing a second substrate, a second conductive layer, and a switchable material layer at the same area. Attachment of the busbar 18 to the exposed first conductive layer 16 is made by application of the soldering material with the ultrasonic oscillations. The busbar 18 may be formed of the solder material. Substantially the same process, not shown, may be used to provide a busbar on the second conductive layer by removing the first substrate, the first conductive layer, and the switchable material layer.

In FIG. 2, a connector 20 may be attached to the surface of the busbar 18. The connector 20 may be attached to the busbar 18 by ultrasonic application or by bonding with a solder without ultrasonic application, depending on the design or structural materials of the busbar 18 and the connector 20. Alternatively, the connector 20 may be adhered to the busbar 18 by a conductive adhesive. A first connector 20 may be attached to the first busbar 18, while a second connector, not shown, may be attached to a second busbar, not shown. The first and second connectors may be attached to the busbars simultaneously or sequentially.

After attaching the connector 20 to the switchable film 12, the switchable film 12 may be laminated between a first glass sheet 22 and a second glass sheet 24 as shown in FIG. 3. The switchable film 12 may be sandwiched between a first interlayer 26 and a second interlayer 28 and laminated between the first and second glass sheets 22, 24 to produce a laminated glazing 30. The connectors 20 project from the edge of the laminated glazing 30 to easily connect a power source. For simplicity, the details of the switchable film 12 layers are not shown in FIG. 3. The glass sheets 22, 24 and interlayers 26, 28 may extend past an edge of the switchable film 12. A third interlayer 27 may be provided around the edge of the switchable film between the first interlayer 26 and the second interlayer 28.

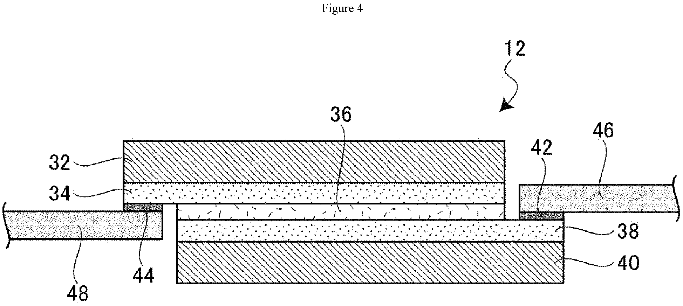

FIG. 4 shows details of the switchable film 12 according to methods disclosed herein. The switchable film 12 may be placed between the first and second interlayers 26, 28 and be laminated between the first and second glass sheets 22, 24. The switchable film 12 may be typically formed of a first substrate 40, a first conductive layer 38, a switchable material layer 36, a second conductive layer 34, and a second substrate 32. To switch between the opaque state and the transparent state, a change in voltage may be applied to the first conductive layer 38 and the second conductive layer 34 via busbars 42, 44 from a first connector 46 and a second connector 48. Particularly, some switchable films may switch to a transparent state when a voltage is applied. An alternating current voltage may be used.

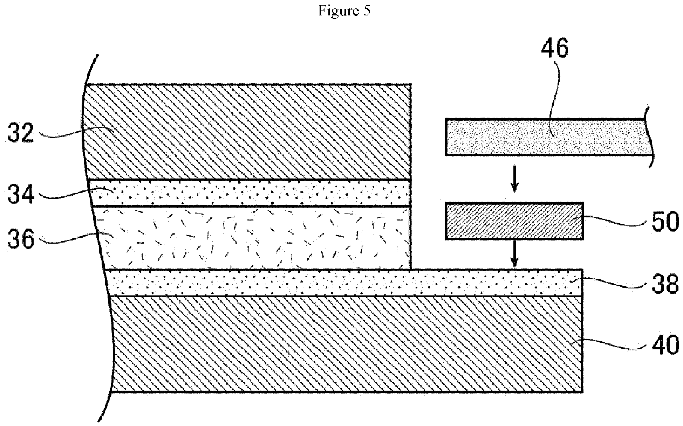

The first connector 46 may be coupled to the first conductive layer 38 through the busbar 42 whereas the second connector 48 may be coupled to the second conductive layer 34 through the second busbar 44. The busbars 42, 44 and the connectors 46, 48 may be connected upon removing the substrates 32, 40 and the conductive layers 34, 38. The connections between the connectors and the conductive layers may be done by various methods as shown from FIG. 5 to FIG. 7. In FIG. 5 to FIG. 7, although only a first conductive layer 38 is illustrated to be connected to a connector 46, the second conductive layer 34 may be connected subsequently to another connector, which is omitted here for the sake of simplicity.

FIG. 5 shows a method of connecting the connector 46 and the first conductive layer 38. The surface of the first conductive layer 38 may be exposed by removing the second substrate 32, the second conductive layer 34, and the switchable material layer 36. A solder material 50 may be provided on the exposed surface of the first conductive layer 38. The solder material 50 melts with application of heat from an ultrasonic probe, not shown, and may be adhered to the surface of the first conductive layer 38, enhanced with the help of ultrasonic oscillation. This ultrasonic application may be done quickly, such as within 10 seconds, and the probe may be heated with a heater attached to the probe. The solder material 50 may be strongly adhered to the surface of the first conductive layer 38. The solder material 50 is provided in an extended shape on the conductive layer's surface as to constitute "a busbar" 16, 42, 44 for connection.

After the solder material 50 is provided, a connector 46 may be attached to the solder material 50 by ultrasonic application or regular soldering application. During ultrasonic application, the ultrasonic probe may be used to heat the solder material 50 for attachment of the connector 46. In the regular soldering application, the solder material 50 is heated again to adhere the connector 46.

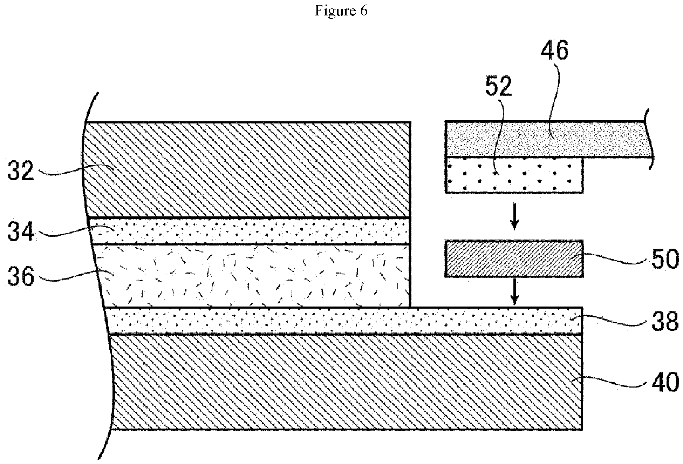

FIG. 6 shows another method of connection between the first connector 46 and the first conductive layer 38. In this method, after the solder material 50 is applied with ultrasonic application, the connector 46 may be coupled to the surface of the solder material 50 via another solder material 52. The solder material 52 may have a melting temperature less than the busbar solder material 50 such that the busbar solder material 50 does not melt with application of the connector 46. The connector 46 may be prepared with the solder material 52 on a back side of the connector 46 in advance, and the solder material 52 may be soldered to the surface of the solder material 50. The solder material 52 may be a conventional solder containing flux, which may be soldered with heat application. Furthermore, the solder material 52 may be formed of the same material as the solder material 50, and the solder material 52 may be subject to ultrasonic application to connect the connector 46 to the solder material 50. The connector 46 may have a conductive adhesive in lieu of the solder material 52, and the connector 46 may be attached to the solder material 50 by pressure application without applying heat to the substrate 40. Alternatively, such the solder material 52 or conductive adhesive may be applied first to the surface of the solder material 50 and then may be adhered to the connector 46.

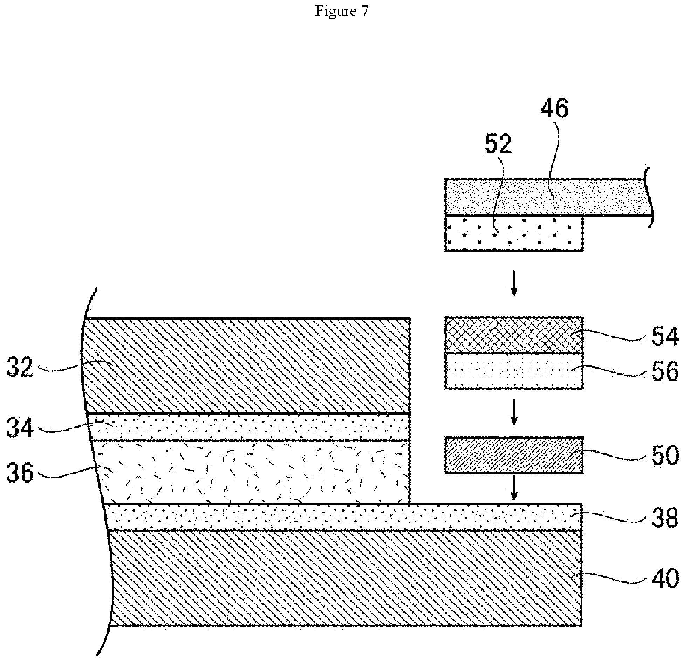

FIG. 7 shows yet another method of connecting the first connector 46 and the first conductive layer 38. In this method, after the solder material 50 is applied with ultrasonic application, a metal foil 54 with a conductive adhesive 56 in the form of a tape may be provided on the solder material 50 serving as the busbar. Subsequently, a connector 46 having a solder material 52 may be provided on the surface of the metal foil 54. The surface of the metal foil 54 may be smooth, such that the connector 46 may easily adhere to the surface of the metal foil 54. Where the metal foil 54 is provided, the metal foil 54 may prevent heat applied to the solder material 52 from reaching the first substrate 40, so that the heat may not affect the first substrate 40. Further as a matter of course, the solder material 52 may be formed of the same material as the solder material 50. Moreover, the connector 46 may have a conductive adhesive in lieu of the solder material 52.

The ultrasonic probe may be formed with an ultrasonic oscillator for generating ultrasonic oscillations, a horn transmitting the generated ultrasonic oscillations, a tip serving as an applicator of the ultrasonic oscillations, and a heater for heating the tip of the probe. To operate the ultrasonic probe, a signal is given from a controller to the ultrasonic oscillator, and a current from the controller flows the heater to apply heat of controlled temperature. A solder material may receive the ultrasonic oscillations and the heat from the heater via the tip, thereby melting and strongly bonding to the surface of the underlying layer.

The above description of the disclosure is provided to enable a person skilled in the art to make or use the disclosure. Various modifications to the disclosure will be readily apparent to those skilled in the art, and the common principles defined herein may be applied to other variations within the scope of the claims. Further, the above description in connection with the drawings describes examples and does not represent the only examples that may be implemented or that are within the scope of the claims.

Furthermore, although elements of the described aspects and/or embodiments may be described or claimed in the singular, the plural is contemplated unless limitation to the singular is explicitly stated. Additionally, all or a portion of any aspect and/or embodiment may be utilized with all or a portion of any other aspect and/or embodiment, unless stated otherwise.

## Claims

1. A method of applying a busbar to a switchable film, comprising:
providing a switchable film having a first substrate, a first conductive layer, a switchable layer, a second conductive layer, and a second substrate, wherein each of the first substrate and the second substrate are comprised of polyethylene terephthalate, PET, films **characterized in that** the method further comprises applying a solder material to the first conductive layer with ultrasonic application to provide a first busbar; and
applying the solder material to the second conductive layer with ultrasonic application to provide a second busbar.

2. The method according to claim 1, wherein the solder material is flux-free.

3. The method according to any of claims 1 and 2, wherein the solder material is lead-free.

4. The method according to any one of claim 1 to claim 3, wherein the first busbar and the second busbar each have a length of at least 5 cm.

5. The method according to any one of claim 1 to claim 4, wherein the first busbar and the second busbar each have a width of 6 mm or less.

6. The method according to any one of claim 1 to claim 5, further comprising removing a portion of the second substrate and the second conductive layer before applying the solder material to the first conductive layer and removing a portion of the first substrate and the first conductive layer before applying the solder material to the second conductive layer.

7. The method according to claim 6, further comprising cleaning the switchable material off of the first conductive layer and the second conductive layer prior to applying the solder material.

8. The method according to claim 6, wherein the conductive layer is not cleaned prior to applying the solder material to the first conductive layer and the second conductive layer such that at least part of the switchable layer remains on the first conductive layer and the second conductive layer during application of the solder material.

9. The method according to any one of claim 1 to claim 8, further comprising applying a first connector to the first busbar and applying a second connector to the second busbar.

10. The method according to claim 9, wherein the first connector and the second connector are applied by the solder material used for the first busbar and the second busbar or by a conductive adhesive.

11. The method according to any one of claim 1 to claim 10, further comprising applying a first metallic foil over the first busbar and a second metallic foil over the second busbar.

12. The method according to claim 11, further comprising applying a first connector to the first metallic foil and applying a second connector to the second metallic foil.

13. The method according to any one of claim 1 to claim 12, wherein the ultrasonic application includes applying the solder material with an ultrasonic probe at a temperature from 230°C to 290°C.

14. The method according to any one of claim 1 to claim 13, wherein the switchable film is a polymer dispersed liquid crystal film.

15. The method according to any one of claim 1 to claim 14, wherein the first conductive layer has more than one electrically isolated portion and each electrically isolated portion includes one of the first busbars.

## Patentansprüche

1. Verfahren zum Aufbringen einer Sammelschiene auf einen schaltbaren Film, das Folgendes umfasst:
Bereitstellen eines schaltbaren Films mit einem ersten Substrat, einer ersten leitfähigen Schicht, einer schaltbaren Schicht, einer zweiten leitfähigen Schicht und einem zweiten Substrat, wobei sowohl das erste Substrat als auch das zweite Substrat aus einem Polyethylenterephthalat-, PET-, Film bestehen, **dadurch gekennzeichnet, dass** das Verfahren weiters Folgendes umfasst:
Aufbringen eines Lötmaterials auf die erste leitfähige Schicht unter Anwendung von Ultraschall, um eine erste Sammelschiene bereitzustellen; und
Aufbringen des Lötmaterials auf die zweite leitfähige Schicht unter Anwendung von Ultraschall, um eine zweite Sammelschiene bereitzustellen.

2. Verfahren nach Anspruch 1, wobei das Lötmaterial flussmittelfrei ist.

3. Verfahren nach einem der Ansprüche 1 und 2, wobei das Lötmaterial bleifrei ist.

4. Verfahren nach einem der Ansprüche 1 bis 3, wobei die erste Sammelschiene und die zweite Sammelschiene jeweils eine Länge von mindestens 5 cm aufweisen.

5. Verfahren nach einem der Ansprüche 1 bis 4, wobei die erste Sammelschiene und die zweite Sammelschiene jeweils eine Breite von 6 mm oder weniger aufweisen.

6. Verfahren nach einem der Ansprüche 1 bis 5, das weiters das Entfernen eines Teils des zweiten Substrats und der zweiten leitfähigen Schicht vor dem Aufbringen des Lötmaterials auf die erste leitfähige Schicht und das Entfernen eines Teils des ersten Substrats und der ersten leitfähigen Schicht vor dem Aufbringen des Lötmaterials auf die zweite leitfähige Schicht umfasst.

7. Verfahren nach Anspruch 6, das außerdem das Entfernen des schaltbaren Materials von der ersten leitfähigen Schicht und der zweiten leitfähigen Schicht vor dem Aufbringen des Lötmaterials umfasst.

8. Verfahren nach Anspruch 6, wobei die leitfähige Schicht vor dem Aufbringen des Lötmaterials auf die erste leitfähige Schicht und die zweite leitfähige Schicht nicht gereinigt wird, sodass zumindest ein Teil der schaltbaren Schicht während des Aufbringens des Lötmaterials auf der ersten leitfähigen Schicht und der zweiten leitfähigen Schicht verbleibt.

9. Verfahren nach einem der Ansprüche 1 bis 8, das außerdem das Aufbringen eines ersten Verbinders auf die erste Sammelschiene und das Aufbringen eines zweiten Verbinders auf die zweite Sammelschiene umfasst.

10. Verfahren nach Anspruch 9, wobei der erste Verbinder und der zweite Verbinder durch das für die erste Sammelschiene und die zweite Sammelschiene verwendete Lötmaterial oder durch einen leitfähigen Klebstoff aufgebracht werden.

11. Verfahren nach einem der Ansprüche 1 bis 10, das außerdem das Aufbringen einer ersten Metallfolie über der ersten Sammelschiene und einer zweiten Metallfolie über der zweiten Sammelschiene umfasst.

12. Verfahren nach Anspruch 11, das außerdem das Aufbringen eines ersten Verbinders auf die erste Metallfolie und das Aufbringen eines zweiten Verbinders auf die zweite Metallfolie umfasst.

13. Verfahren nach einem der Ansprüche 1 bis 12, wobei die Ultraschallanwendung das Aufbringen des Lötmaterials mit einer Ultraschallsonde bei einer Temperatur von 230 °C bis 290 °C umfasst.

14. Verfahren nach einem der Ansprüche 1 bis 13, wobei der schaltbare Film ein polymerdispergierter Flüssigkristallfilm ist.

15. Verfahren nach einem der Ansprüche 1 bis 14, wobei die erste leitfähige Schicht mehr als einen elektrisch isolierten Abschnitt aufweist und jeder elektrisch isolierte Abschnitt eine der ersten Sammelschienen enthält.

## Revendications

1. Procédé d'application d'une barre omnibus à un film commutable, comprenant l'étape consistant à :
fournir un film commutable présentant un premier substrat, une première couche conductrice, une couche commutable, une seconde couche conductrice et un second substrat, dans lequel chacun du premier substrat et du second substrat est composé de films de polyéthylène téréphtalate, PET, **caractérisé en ce que** le procédé comprend en outre les étapes consistant à
appliquer un matériau de soudure à la première couche conductrice avec une application ultrasonore pour fournir une première barre omnibus ; et
appliquer le matériau de soudure à la seconde couche conductrice avec une application ultrasonore pour fournir une seconde barre omnibus.

2. Procédé selon la revendication 1, dans lequel le matériau de soudure est exempt de flux.

3. Procédé selon l'une quelconque des revendications 1 et 2, dans lequel le matériau de soudure est exempt de plomb.

4. Procédé selon l'une quelconque des revendications 1 à 3, dans lequel la première barre omnibus et la seconde barre omnibus présentent chacune une longueur d'au moins 5 cm.

5. Procédé selon l'une quelconque des revendications 1 à 4, dans lequel la première barre omnibus et la seconde barre omnibus présentent chacune une largeur de 6 mm ou moins.

6. Procédé selon l'une quelconque des revendications 1 à 5, comprenant en outre l'élimination d'une partie du second substrat et de la seconde couche conductrice avant d'appliquer le matériau de soudure à la première couche conductrice et l'élimination d'une partie du premier substrat et de la première couche conductrice avant d'appliquer le matériau de soudure à la seconde couche conductrice.

7. Procédé selon la revendication 6, comprenant en outre un nettoyage du matériau commutable à partir de la première couche conductrice et de la seconde couche conductrice avant l'application du matériau de soudure.

8. Procédé selon la revendication 6, dans lequel la couche conductrice n'est pas nettoyée avant l'application du matériau de soudure sur la première couche conductrice et la seconde couche conductrice de telle sorte qu'au moins une partie de la couche commutable reste sur la première couche conductrice et la seconde couche conductrice pendant l'application du matériau de soudure.

9. Procédé selon l'une quelconque des revendications 1 à 8, comprenant en outre l'application d'un premier connecteur à la première barre omnibus et l'application d'un second connecteur à la seconde barre omnibus.

10. Procédé selon la revendication 9, dans lequel le premier connecteur et le second connecteur sont appliqués par le matériau de soudure utilisé pour la première barre omnibus et la seconde barre omnibus ou par un adhésif conducteur.

11. Procédé selon l'une quelconque des revendications 1 à 10, comprenant en outre l'application d'une première feuille métallique sur la première barre omnibus et d'une seconde feuille métallique sur la seconde barre omnibus.

12. Procédé selon la revendication 11, comprenant en outre l'application d'un premier connecteur à la première feuille métallique et l'application d'un second connecteur à la seconde feuille métallique.

13. Procédé selon l'une quelconque des revendications 1 à 12, dans lequel l'application ultrasonore inclut l'application du matériau de soudure avec une sonde ultrasonore à une température de 230°C à 290°C.

14. Procédé selon l'une quelconque des revendications 1 à 13, dans lequel le film commutable est un film de cristaux liquides dispersés dans un polymère.

15. Procédé selon l'une quelconque des revendications 1 à 14, dans lequel la première couche conductrice présente plus d'une partie électriquement isolée et chaque partie électriquement isolée inclut l'une des premières barres omnibus.
